# EUROPEAN PATENT APPLICATION

(11) **EP 4 790 966 A1**
(43) Date of publication of application: **12.08.2026**
(21) Application number: 26152089.4
(22) Date of filing: 15.01.2026
(51) Int. Cl.: H04L 67/12, G06F 21/71, H04L 9/40, H04L 67/60

(54) **SYSTEM AND METHOD FOR VALIDATING VEHICLE HARDWARE**

(30) Priority: 05.02.2025 US 202519046035
(71) Applicant: Toyota Jidosha Kabushiki Kaisha, Toyota-shi, Aichi-ken 471-8571 (JP)
(72) Inventor: MCGARY, Caleb, Chuo-Ku, 103-0022 (JP)
(74) Representative: D Young & Co LLP

(57) **Abstract**

Provided are system, method, and device for automatically validating vehicle hardware. According to example embodiments, the system may include: a memory storage storing computer-executable instructions; and at least one processor communicatively coupled to the memory storage, wherein the at least one processor may be configured to execute the instructions to: receive, from a target hardware, an attestation request along with a cryptographic signature; validate the attestation request based on the cryptographic signature; obtain, from the target hardware in response to a successful validation of the attestation request, an attestation parameter of the target hardware; instruct the target hardware to perform a proof of work (PoW); validate a result of performing the PoW by the target hardware based on the obtained attestation parameter of the target hardware; and specify, in response to a successful validation of the result of performing the PoW, the target hardware as attested.

## Description

### TECHNICAL FIELD

Example embodiments of the present disclosure relate to a vehicle system, and more specifically, relate to the validation of hardware in the vehicle system.

### BACKGROUND

Modern vehicles are capable of performing a wide range of complex functions, such as generating telemetry data, transmitting and receiving data via the internet, providing driving assistance operations, and the like. Such functions may be enabled and performed by a piece of hardware installed in the vehicle.

In recent history, vehicle hardware has been developed and manufactured to be extensible in a plug and play manner, such that said hardware can be installed and be operational quickly without much effort. Such improvement enhances the user experience and expands the availability of functions and computational power of the vehicle in a simple and effective manner.

In this regard, the above improvement of the vehicle hardware has given room for counterfeit hardware and untrustworthy hardware (hardware that falsely reports its ability to perform a particular operation) to be more accessible and implemented in a vehicle. Examples of such hardware include USB drives that falsely report storage space, counterfeit USB cables that damage connected devices, fake modular CPUs, and the like. Such hardware may greatly increase the safety and security risk to the driver of the vehicle.

### SUMMARY

Example embodiments consistent with the present disclosure allow for hardware in the vehicle to be attested and validated in an accurate and effective manner based on an actual result of Proof of Work performed by the hardware as well as sync cycles, thereby improving the security against counterfeit and untrustworthy hardware.

According to example embodiments, a system is provided. The system may include: a memory storage storing computer-executable instructions; and at least one processor communicatively coupled to the memory storage, wherein the at least one processor may be configured to execute the instructions to: receive, from a target hardware, an attestation request along with a cryptographic signature; validate the attestation request based on the cryptographic signature; obtain, from the target hardware in response to a successful validation of the attestation request, an attestation parameter of the target hardware; instruct the target hardware to perform a proof of work (PoW); validate a result of performing the PoW by the target hardware based on the obtained attestation parameter of the target hardware; and specify, in response to a successful validation of the result of performing the PoW, the target hardware as attested.

According to example embodiments, the obtained attestation parameter may include at least one of: a CPU speed, a CPU frequency, and a power level.

According to example embodiments, the at least one processor may be further configured to execute the instructions to: broadcast an attestation capability; detect a broadcast-end condition; and terminate broadcasting the attestation capability in response to detecting the broadcast-end condition.

According to example embodiments, the broadcast-end condition may include: a vehicle not being in motion and a time after a primary hardware is powered up being less than a threshold.

According to example embodiments, the at least one processor may be further configured to execute the instructions to: establish a communication schedule with the target hardware based on the obtained attestation parameter of the target hardware and an attestation parameter of a primary hardware; determine an amount of time which the target hardware fails to communicate according to the communication schedule; specify, in response to determining that the amount of time which the target hardware fails to communicate according to the communication schedule exceeds a threshold, the target hardware as unattested.

According to example embodiments, the target hardware may be specified as attested in an attestation map along with a time stamp of a last communication from the target hardware.

According to example embodiments, the target hardware may include an electronic control unit (ECU).

According to example embodiments, a method is provided. The method may include: receiving, from a target hardware, an attestation request along with a cryptographic signature; validating the attestation request based on the cryptographic signature; obtaining, from the target hardware in response to a successful validation of the attestation request, an attestation parameter of the target hardware; instructing the target hardware to perform a proof of work (PoW); validating a result of performing the PoW by the target hardware based on the obtained attestation parameter of the target hardware; and specifying, in response to a successful validation of the result of performing the PoW, the target hardware as attested.

According to example embodiments, the obtained attestation parameter may include at least one of: a CPU speed, a CPU frequency, and a power level.

According to example embodiments, the method may further include: broadcasting an attestation capability; detecting a broadcast-end condition; and terminating broadcasting the attestation capability in response to detecting the broadcast-end condition.

According to example embodiments, the broadcast-end condition may include: a vehicle not being in motion and a time after a primary hardware is powered up being less than a threshold.

According to example embodiments, the method may further include: establishing a communication schedule with the target hardware based on the obtained attestation parameter of the target hardware and an attestation parameter of a primary hardware; determining an amount of time which the target hardware fails to communicate according to the communication schedule; and specifying, in response to determining that the amount of time which the target hardware fails to communicate according to the communication schedule exceeds a threshold, the target hardware as unattested.

According to example embodiments, the target hardware may be specified as attested in an attestation map along with a time stamp of a last communication from the target hardware.

According to example embodiments, the target hardware may include an electronic control unit (ECU).

According to example embodiments, a non-transitory computer-readable recording medium is provided. The non-transitory computer-readable recording medium may have recorded thereon instructions executable by at least one processor to cause the at least one processor to perform a method including: receiving, from a target hardware, an attestation request along with a cryptographic signature; validating the attestation request based on the cryptographic signature; obtaining, from the target hardware in response to a successful validation of the attestation request, an attestation parameter of the target hardware; instructing the target hardware to perform a proof of work (PoW); validating a result of performing the PoW by the target hardware based on the obtained attestation parameter of the target hardware; and specifying, in response to a successful validation of the result of performing the PoW, the target hardware as attested.

According to example embodiments, the obtained attestation parameter may include at least one of: a CPU speed, a CPU frequency, and a power level.

According to example embodiments, the method may further include: broadcasting an attestation capability; detecting a broadcast-end condition; and terminating broadcasting the attestation capability in response to detecting the broadcast-end condition.

According to example embodiments, the broadcast-end condition may include: a vehicle not being in motion and a time after a primary hardware is powered up being less than a threshold.

According to example embodiments, the method may further include: establishing a communication schedule with the target hardware based on the obtained attestation parameter of the target hardware and an attestation parameter of a primary hardware; determining an amount of time which the target hardware fails to communicate according to the communication schedule; and specifying, in response to determining that the amount of time which the target hardware fails to communicate according to the communication schedule exceeds a threshold, the target hardware as unattested.

According to example embodiments, the target hardware may be specified as attested in an attestation map along with a time stamp of a last communication from the target hardware.

Additional aspects will be set forth in part in the description that follows and, in part, will be apparent from the description, or may be realized by practice of the presented embodiments of the disclosure.

### BRIEF DESCRIPTION OF THE DRAWINGS

Features, advantages, and significance of exemplary embodiments of the disclosure will be described below with reference to the accompanying drawings, in which like reference numerals denote like elements, and wherein:
FIG. 1 illustrates a block diagram of an example system configuration for validating vehicle hardware, according to one or more example embodiments;
FIG. 2 illustrates a flow diagram of an example method for validating vehicle hardware, according to one or more example embodiments;
FIG. 3 illustrates a flow diagram of an example method for validating vehicle hardware, according to one or more example embodiments;
FIG. 4A and FIG. 4B illustrate a flow sequence of an example use case for validating vehicle hardware, according to one or more example embodiments; and
FIG. 5 illustrates a block diagram of example components in a system, according to one or more example embodiments.

### DETAILED DESCRIPTION

The following detailed description of exemplary embodiments refers to the accompanying drawings. The foregoing disclosure provides illustration and description but is not intended to be exhaustive or to limit the implementations to the precise form disclosed. Modifications and variations are possible in light of the above disclosure or may be acquired from practice of the implementations. Further, one or more features or components of one embodiment may be incorporated into or combined with another embodiment (or one or more features of another embodiment). Additionally, in the flowcharts and descriptions of operations provided below, it is understood that one or more operations may be omitted, one or more operations may be added, one or more operations may be performed simultaneously (at least in part), and the order of one or more operations may be switched.

Even though particular combinations of features are recited in the claims and/or disclosed in the specification, these combinations are not intended to limit the disclosure of possible implementations. In fact, many of these features may be combined in ways not specifically recited in the claims and/or disclosed in the specification. Although each dependent claim listed below may directly depend on only one claim, the disclosure of possible implementations includes each dependent claim in combination with every other claim in the claim set.

No element, act, or instruction used herein should be construed as critical or essential unless explicitly described as such. Also, as used herein, the articles "a" and "an" are intended to include one or more items, and may be used interchangeably with "one or more." Where only one item is intended, the term "one" or similar language is used. Also, as used herein, the terms "has," "have," "having," "include," "including," or the like are intended to be openended terms. Further, the phrase "based on" is intended to mean "based, at least in part, on" unless explicitly stated otherwise. Furthermore, expressions such as "[A] and/or [B]", "at least one of [A] and [B]" or "at least one of [A] or [B]" are to be understood as including only A, only B, or both A and B.

Expressions such as "at least one processor," where configured to implement a plurality of operations, execute a plurality of instructions, etc., are to be understood as a single processor implementing the plurality of operations, etc., or each of plural processors implementing at least some (but not necessarily all) of the plurality of operations, etc.

Reference throughout this specification to "one embodiment," "an embodiment," "non-limiting exemplary embodiment," or similar language means that a particular feature, structure, or characteristic described in connection with the indicated embodiment is included in at least one embodiment of the present solution. Thus, the phrases "in one embodiment", "in an embodiment," "in one non-limiting exemplary embodiment," and similar language throughout this specification may, but do not necessarily, all refer to the same embodiment.

Further, the described features, advantages, and characteristics of the present disclosure may be combined in any suitable manner in one or more example embodiments. One skilled in the relevant art will recognize, in light of the description herein, that the present disclosure can be practiced without one or more of the specific features or advantages of a particular embodiment. In other instances, additional features and advantages may be recognized in certain embodiments that may not be present in all embodiments of the present disclosure.

Furthermore, the term "vehicle" and "vehicle system"described herein refers to any suitable type of vehicle in which example embodiments of the present disclosure can be implemented. For instance, the "vehicle" may refer to a motorized vehicle such as a car, a truck, a bus, a motorcycle, or any other suitable type of automobile powered by an engine, motor, or other mechanical means. Alternatively or additionally, the "vehicle" described herein may refer to a bicycle, a skateboard, and any other suitable types of non-motorized vehicle, without departing from the scope of the present disclosure.

As explained above, the improvement of the vehicle hardware has given rise to counterfeit hardware and hardware that falsely reports its ability to perform a particular operation, which may greatly increase the safety and security risk to the driver of the vehicle.

In the related art, in order to validate whether or not a piece of hardware is genuine, the driver may need to manually check and validate the hardware by, for example, checking the serial number, running a separate validation tool, and the like. However, such methods may be inefficient and may not be highly reliable in accurately validating the hardware.

Accordingly, there is a need for a system that is able to validate the hardware in the vehicle in an efficient and accurate manner.

It is contemplated that features, advantages, and significances of example embodiments described herein are merely a portion of the present disclosure, and are not intended to be exhaustive or to limit the scope of the present disclosure. Further descriptions of the features, components, configuration, operations, and implementations of the example embodiments of the present disclosure are provided in the following.

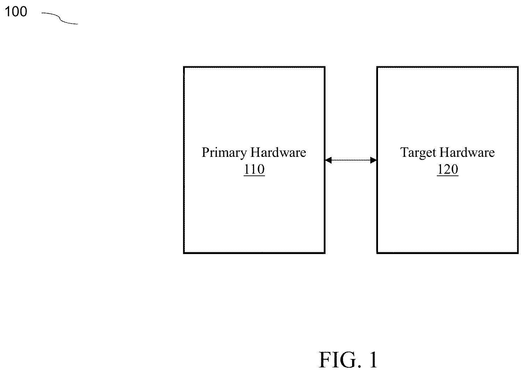

FIG. 1 illustrates a block diagram of an example system configuration 100 for validating vehicle hardware, according to one or more example embodiments. As illustrated in FIG. 1, system configuration 100 may include a primary hardware 110 and a target hardware 120.

The primary hardware 110 may include a piece of hardware installed in a vehicle, which has already been validated as being genuine. The primary hardware may have been validated via, for example, a validation tool/software, and the like. Here, the primary hardware 110 may act as an attestation point, which attests and validates other hardware in the vehicle. In this regard, according to example embodiments, the primary hardware 110 may include an apparatus, a system, a platform, a module, or the like, which may be configured to perform one or more operations or actions for validating vehicle hardware. According to example embodiments, the primary hardware may include an electronic control unit (ECU), which may include a system on chip (SoC).

In this regard, the primary hardware 110 may be configured to collect claims from other piece of hardware installed in the vehicle regarding their states, status, and capabilities. Said claims may follow a particular standard specification, such as ISO 17990-3 software entitlement schema. Further, the primary hardware 110 may utilize one or more hardware-based security technologies when performing one or more operations described herein as a secure enclave for execution.. Said hardware-based security technologies may include, for example, ARM Trustzone, AMD Secure Encrypted Virtualization (SEV), Intel Software Guard Extensions (SGX), and the like. Furthermore, the primary hardware may utilize one or more encryption key storage methods when performing one or more operations described herein. Said encryption key storage method may be tamper proof and non-clonable such, for example, electronic fuse (e-fuse). Further still, the primary hardware 110 may include and implement a Trusted Execution Environment (TEE).

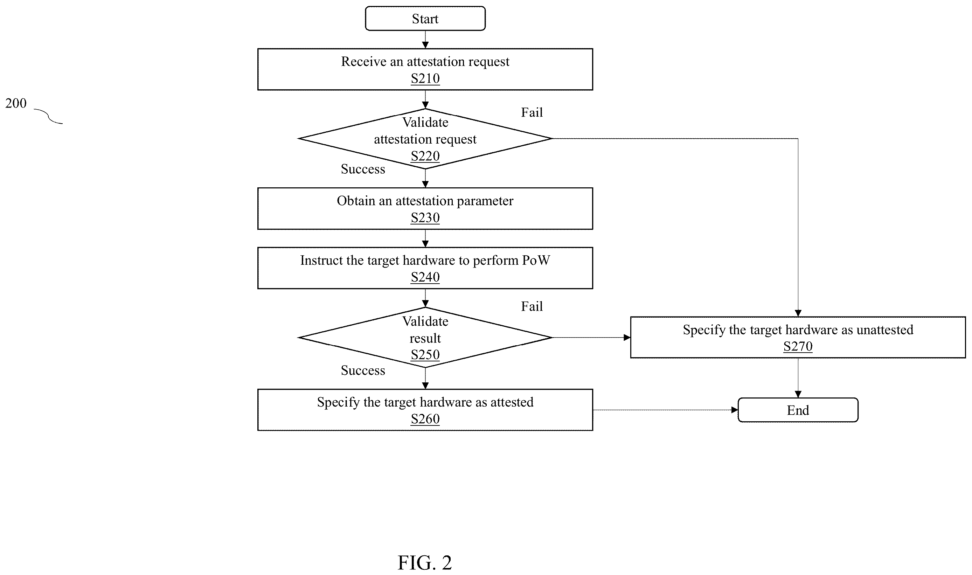

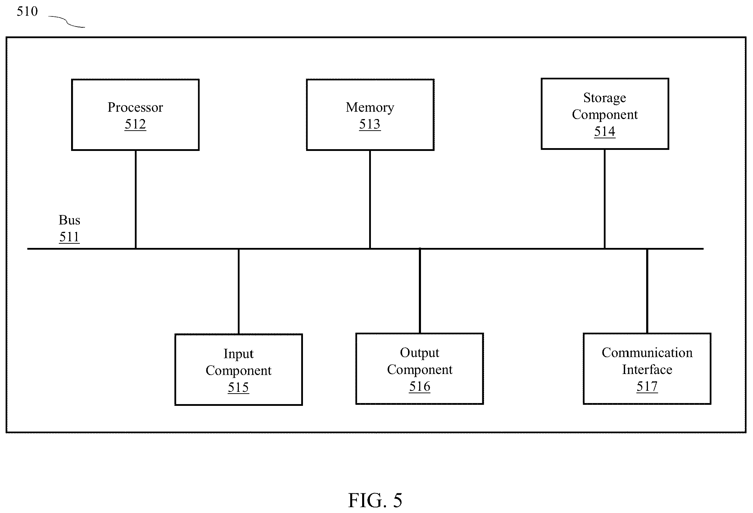

Example operations performable by the primary hardware 110 for validating vehicle hardware are described below with reference to FIG. 2 to FIG. 4. Further, several example components which may be included in the primary hardware 110, according to one or more example embodiments, are described below with reference to FIG. 5.

The target hardware 120 may include a piece of hardware installed in a vehicle, which has not been validated and is a target for validation/attestation by the primary hardware 110. According to example embodiments, the primary hardware may include an electronic control unit (ECU), which may include a system on chip (SoC). The target hardware 120 may be communicatively coupled to the primary hardware 110 via one or more interfaces, such as serial port, USB port, PCI express, Ethernet, and the like. Further, the target hardware 120 may include and implement a Trusted Execution Environment (TEE).

In the following, several example operations performable by the primary hardware of the present disclosure are described with reference to FIG. 2 to FIG. 4.

FIG. 2 illustrates a flow diagram of an example method 200 for validating vehicle hardware, according to one or more example embodiments. One or more operations in method 200 may be performed by at least one processor (e.g., processor 520) of the primary hardware.

As illustrated in FIG. 2, at operation S210, the at least one processor may be configured to receive an attestation request. The attestation request may be received from a target hardware requesting the primary hardware to attest/validate the target hardware. Further, the attestation request may include a cryptographic signature.

According to example embodiments, the attestation request may be received via one or more interfaces of the primary hardware. In particular, the primary hardware may include and implement a Trusted Execution Environment (TEE), where the TEE may be configured to control the one or more interface of the primary hardware (e.g., serial port, USB port, PCI express, Ethernet, etc.) to listen and wait for the receipt of the attestation request.

According to example embodiments, the attestation request may be transmitted from the target hardware in response to receiving an attestation capability from the primary hardware. In particular, the primary hardware may be configured to broadcast an attestation capability to all hardware in the vehicle. The attestation capability may be constantly broadcasted in a periodic manner (e.g., once every 1s) until a broadcast-end condition is detected. In response to detecting the broadcast-end condition, the primary hardware may be configured to terminate broadcasting the attestation capability.

According to example embodiments, the attestation capability may include a signal, a message, and the like indicating that the primary hardware is available for attestation (validation) as well as any associated communication information, such as one or more interfaces which the primary hardware may be communicated with (e.g., serial port, USB port, PCI express, Ethernet, etc.) Further, the broadcast-end condition may include, for example, a vehicle not being in motion, a time after a primary hardware is powered up being less than a threshold (e.g., the primary hardware has been powered up (ignition start) for less than 300s), and the like. Accordingly, when one of the above broadcast-end condition is true, the primary hardware may terminate broadcasting the attestation capability.

In view of the above, the target hardware may be configured to transmit the attestation request to the primary hardware in response to receiving the broadcasted attestation capability from the primary hardware. According to example embodiments, the target hardware may be configured to transmit the attestation request to the primary hardware in response to receiving the broadcasted attestation capability from the primary hardware for a number of times. For example, the target hardware may be configured to transmit the attestation request to the primary hardware after receiving the broadcasted attestation capability for three times.

According to example embodiments, the attestation request may be received along with an initiation of a key exchange method, such as a Diffie-Hellman key exchange. Further, the attestation request may include a packet that is signed with the cryptographic signature by an encryption key.

According to example embodiments, in response to receiving the attestation request, the primary hardware may establish a secure connection with the target hardware. The method then proceeds to operation S220.

At operation S220, the at least one processor may be configured to validate the attestation request based on the cryptographic signature.

Here, as described above, the attestation request may include a packet that is signed with the cryptographic signature by an encryption key. As such, the at least one processor may be configured to validate the attestation request by validating a chain of trust of the encryption key used to sign the cryptographic signature of the attestation request.

In this regard, if the encryption key chains up appropriately to a root of a trust encryption key (e.g., based on an encryption key stored using encryption key storage method described above in relation to FIG. 1), the at least one processor may determine that the encryption key used to sign the cryptographic signature of the attestation request is from a trusted manufacturer and the validation may be successful. On the other hand, if the encryption key does not chain up appropriately to a root of a trust encryption key, the at least one processor may determine that the encryption key used to sign the cryptographic signature of the attestation request is not from a trusted manufacturer and the validation may fail.

Accordingly, in response to a successful validation of the attestation request, the at least one processor may determine that the next stage of validation may begin to further check if the target hardware is genuine, and the method then proceeds to operation S230. On the other hand, in response to a failed validation of the attestation request, the at least one processor may determine that the target hardware is not genuine, and the method then proceeds to operation S270.

At operation S230, the at least one processor may be configured to obtain an attestation parameter of the target hardware. The attestation parameter may include a parameter used for validation of a proof of work (PoW) performed by the target hardware (see below in relation to operations S240 and S250). According to example embodiments, the attestation parameter may also include a parameter used for performing a clock cycle sync between the primary hardware and the target hardware (see below in relation to operations S235). According to example embodiments, the attestation parameter may include at least one of: a CPU speed, a CPU frequency, and a power level.

According to example embodiments, the at least one processor may be configured to obtain the attestation parameter of the target hardware by: transmitting a request to receive the attestation parameter of the target hardware to the target hardware, and receiving the attestation parameter of the target hardware from the target hardware. The method then proceeds to operation S240.

At operation S240, the at least one processor may be configured to instruct the target hardware to perform a proof of work (PoW). Here, the PoW may refer to a form of cryptographic proof in which a target entity (i.e., target hardware) proves to another entity (i.e., the primary hardware) that a certain computational effort has been performed. In this regard, the PoW may include a PoW execution item for peripherals of the target hardware.

According to example embodiments, the at least one processor may be configured to instruct the target hardware to perform the PoW by: determining (i.e., designing, generating, selecting, etc.) the PoW, transmitting a request for the target hardware to perform the determined PoW to the target hardware, and receiving a result of performing the PoW by the target hardware from the target hardware.

The PoW may be determined in any manner using any method as appropriate. According to example embodiments, the PoW may be determined in the context of a normal world outside of the TEE of the primary hardware.

According to example embodiments, the PoW may be encrypted with a public key of the target hardware's TEE, which is signed by the primary hardware and transmitted to the target hardware via a secure channel to the target hardware's TEE. The method then proceeds to operation S250.

At operation S250, the at least one processor may be configured to validate a result of performing the PoW by the target hardware. The result of performing the PoW by the target hardware may be validated based on the obtained attestation parameter of the target hardware (i.e., attestation parameter obtained during operation S230).

For example, during operation S230, the attestation parameter may be obtained where the target hardware reports that its CPU speed (attestation parameter) is 5.5GHz. Then, during operation S240, the primary hardware may instruct the target hardware to perform the PoW to proof what is the true/actual CPU speed of the target hardware. In this regard, during operation S240, the target hardware may transmit the result of performing the PoW, which shows that the true/actual CPU speed of the target hardware is 2.1GHz. Accordingly, during operation S250, the primary hardware may validate such result and see that the true/actual CPU speed of the target hardware is lower than the reported CPU speed.

Here, it is understood that the method and standard for performing the validation of the result of performing the PoW may be any as appropriate according to the particular attestation parameter, and may be specified by a user (e.g., manufacture, etc.) For example, the validation may be successful if the obtained attestation parameter matches with or is within a certain amount of error to the result of performing the PoW (e.g., the validation is successful if the result of performing the PoW shows that the true/actual CPU speed of the target hardware is 5.5GHz (reported CPU speed)). In another example, the validation may be successful if the obtained attestation parameter is lower than the result of performing the PoW (i.e., the result is at least at the minimum level reported; e.g., the validation is successful if the result of performing the PoW shows that the true/actual CPU speed of the target hardware is at least 5.5GHz (reported CPU speed)).

In this regard, in response to a successful validation of the result of performing the PoW, the at least one processor may determine that the target hardware is genuine, and the method then proceeds to operation S260. On the other hand, in response to a failed validation of the result of performing the PoW, the at least one processor may determine that the target hardware is not genuine, and the method then proceeds to operation S270.

At operation S260, the at least one processor may be configured to specify the target hardware as attested. The target hardware may be specified as attested in an attestation map. According to example embodiments, the target hardware may be specified as attested in the attestation map along with a time stamp of a last communication from the target hardware.

In particular, the primary hardware may store a map indicating all hardware in the vehicle which have been attested within the TEE. Accordingly, in response to a successful validation of the result of performing the PoW, the primary hardware may update the map to specify the target hardware as attested (genuine).

According to example embodiments, the attestation map may also include a result of the PoW as well as a unique identification (e.g., Globally Unique Identifier (GUID)) of the target hardware.

While the above description is provided with reference to "map", it is understood that the present disclosure is not limited thereto, and the "map" may be in any form, such as a list and the like.

At operation S270, the at least one processor may be configured to specify the target hardware as unattested. The target hardware may be specified as unattested in the attestation map.

In view of the above, the at least one processor may be configured to permit all hardware in the vehicle which has been attested to perform their respective functions and operations.

For example, the primary hardware may allow the Operating System (OS) of the target hardware (attested and validated) to open communications with the primary hardware via a low latency communication channel, where the primary hardware may then directly address the memory address space of the target hardware via sending a command prefixed with the GUID that represents the target hardware. This allows the primary hardware to extend its zone of control. The primary hardware may then designate a piece of attested hardware (i.e., a target hardware that has been attested and validated) that is sufficiently powerful as a secondary hardware and share sufficient information with the secondary hardware on a sync schedule so that should the primary hardware fail, the secondary will be able to retain control and act as the primary hardware.

Upon performing operation S260 and/or S270, the method 200 may be ended or be terminated. Alternatively, method 200 may return to operation S210, such that the at least one processor may be configured to repeatedly perform, for at least a predetermined amount of time, the receiving the attestation request (at operation S210), the validating the attestation request (at operation S220), the obtaining the attestation parameter (at operation S230), the instructing the target hardware (at operation S240), the validating the result (at operation S250), the specifying the target hardware (at operation S260), and/or the specifying the target hardware (at operation S270). For instance, the at least one processor may continuously (or periodically) receive the attestation request from other hardware in the vehicle (i.e., second target hardware), and then restart the receiving the attestation request (at operation S210), the validating the attestation request (at operation S220), the obtaining the attestation parameter (at operation S230), the instructing the target hardware (at operation S240), the validating the result (at operation S250), the specifying the target hardware (at operation S260), and/or the specifying the target hardware (at operation S270).

In view of the above, the above processes allow for hardware in the vehicle to be attested and validated in an accurate and effective manner based on an actual result of the PoW performed by the hardware, thereby improving the security against counterfeit and untrustworthy hardware.

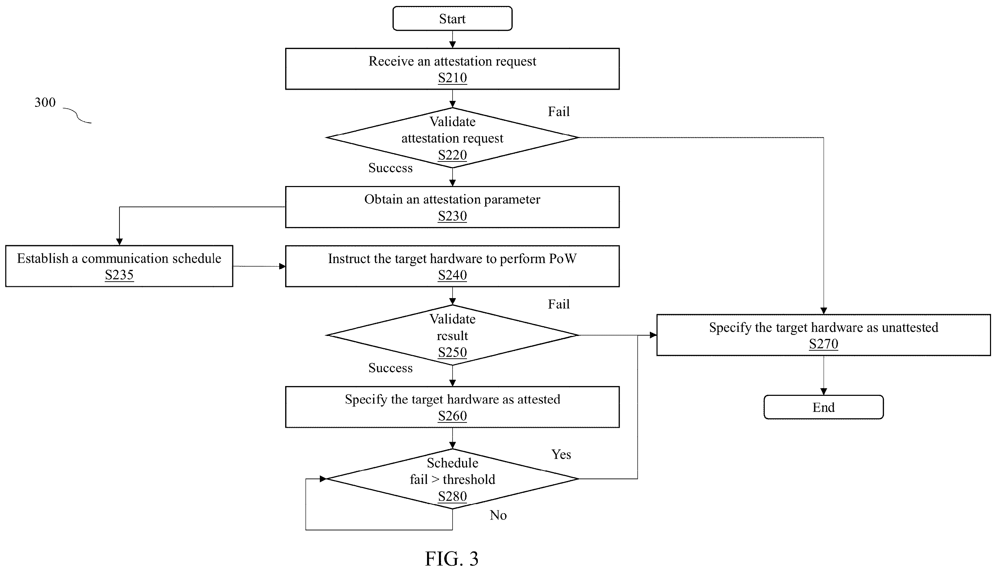

FIG. 3 illustrates a flow diagram of an example method 300 for validating vehicle hardware, according to one or more example embodiments. One or more operations in method 300 may be performed by at least one processor (e.g., processor 520) of the primary hardware.

As shown in FIG. 3, the method 300 may be similar to method 200 described above in relation to FIG. 2, with the addition of operation S235 between operation S230 and S240, and the addition of operation S280 after operation S260. As such, descriptions associated with method 200 are omitted herein for clarity.

At operation S235, the at least one processor may be configured to establish a communication schedule with the target hardware.

The communication schedule may include a schedule in which the primary hardware and the target hardware can communicate with each other. According to example embodiments, the communication schedule may define a sync cycle (e.g., clock sync cycle), which specifies a periodic cycle of time in which the primary hardware and the target hardware can communicate with each other (sync).

As such, according to example embodiments, the primary hardware may communicate with the target hardware according to the communication schedule. In particular, the primary hardware may communicate with the target hardware according to the communication schedule before the target hardware is specified as attested (e.g., during operation S240), as well as after the target hardware is specified as attested (after operation S260). For example, after the target hardware is specified as attested during operation S260, the primary hardware may continue communication with the target hardware according to the communication schedule from the normal world operating system, where services may be brought up in sync with a common sync point (signed counter message that increments up) according to the communication schedule.

The communication schedule may be established based on the obtained attestation parameter of the target hardware and an attestation parameter of the primary hardware. In particular, according to example embodiments, the at least one processor may be configured to establish the communication schedule with the target hardware by: determining the communication schedule based on the obtained attestation parameter of the target hardware and the attestation parameter of the primary hardware, and transmitting the determined communication schedule to the target hardware.

For example, as described above in relation to operation S230, the attestation parameter may include a parameter used for performing a clock cycle sync between the primary hardware and the target hardware, and may include at least one of: a CPU speed, a CPU frequency, and a power level. In this regard, the primary hardware may inspect (e.g., via the TEE) its own CPU speed, CPU frequency, and power level, inspect the CPU speed, CPU frequency, and power level of the target hardware (attestation parameter obtained during operation S230), and identify where an overlap for executing instructions exists on the CPU of the target hardware in order to determine the communication schedule. The determined communication schedule may then be transmitted to the target hardware accordingly. It is understood that, if the CPU of the target hardware is a real time core, the above may take the form of a shared communication mechanism every x number of instructions. Such real time core may be validated to be able to execute time synchronization protocols, such as the Autosar PRS TimeSyncProtocol.

It is understood that, while different CPUs (i.e., in SoCs) may operate at different frequencies and clock speeds, a common sync point should exist between different SoCs (i.e., primary hardware and target hardware). As such, additional attestation and validation may be performed based on the above parameters periodically.

In this regard, as described above the primary hardware may communicate with the target hardware according to the communication schedule (sync cycle) after the target hardware is specified as attested during operation S260.

Here, at operation S280, the at least one processor may be configured to determine an amount of time which the target hardware fails to communicate according to the communication schedule, and determine if the determined amount of time is greater than a threshold.

In this regard, in response to determining that the amount of time is not greater than the threshold, the primary hardware may determine that the target hardware is still trustworthy, and continue to check and track the amount of time which the target hardware fails to communicate according to the communication schedule. On the other hand, in response to determining that the amount of time is greater than the threshold, the primary hardware may determine that the target hardware is no longer trustworthy, and the method proceeds to operation S270 to specify that the target hardware as unattested.

For example, if the target hardware misses the sync cycle for three times, the primary hardware may determine that the target hardware is no longer trustworthy.

In view of the above, the above processes allow for the attested/validated hardware in the vehicle to continuously be checked and validated based on the sync cycle, thereby further improving the security against counterfeit and untrustworthy hardware.

Additionally, as described above in relation to method 200, the primary hardware may designate a piece of attested hardware (i.e., a target hardware that has been attested and validated) that is sufficiently powerful as a secondary hardware and share sufficient information with the secondary hardware on a sync schedule so that should the primary hardware fail, the secondary will be able to retain control and act as the primary hardware. Here, the secondary hardware may maintain a known state of the memory via a hashmap and transmit a hash of said hashmap every other common sync point to the primary hardware. The primary hardware may be able to validate the result maps. This way the primary hardware is aware that the secondary is still valid and in sync.

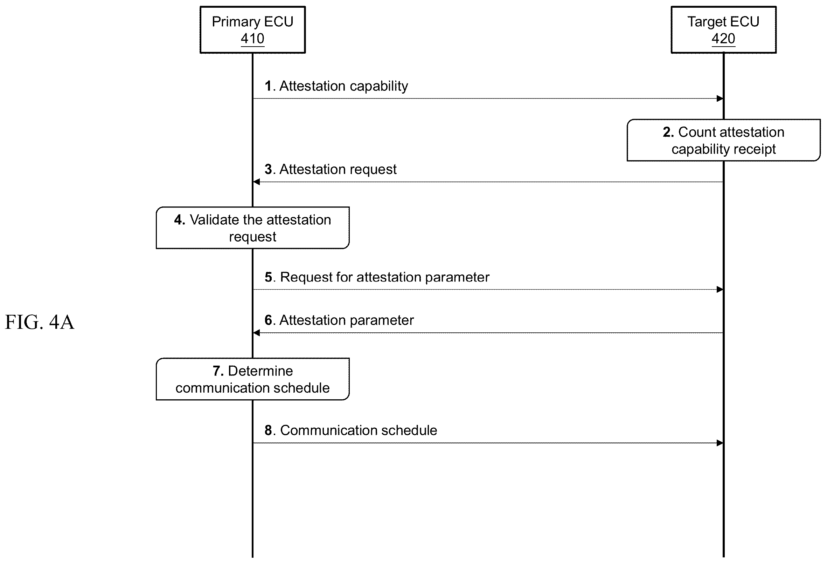

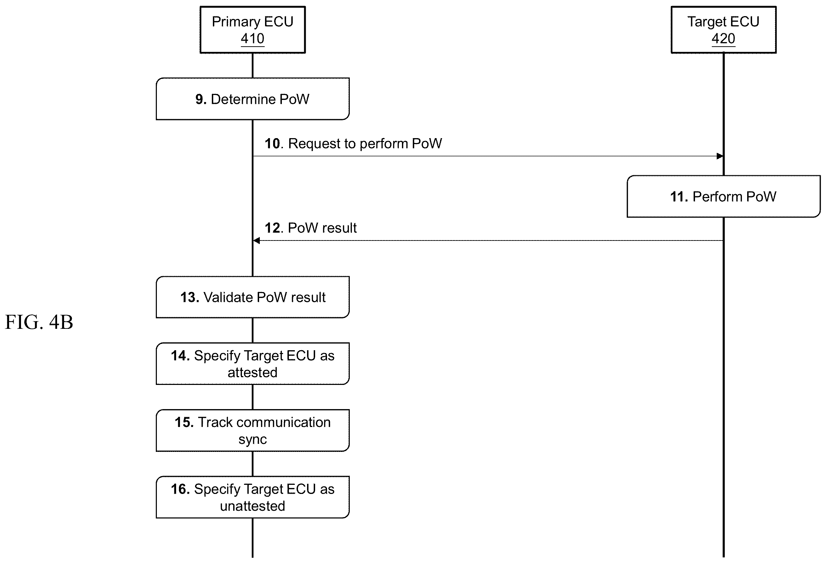

FIG. 4A and FIG. 4B illustrate a flow sequence of an example use case for validating vehicle hardware, according to one or more example embodiments. As shown in FIG. 4A and FIG. 4B, the flow sequence may involve a primary ECU 410 and a target ECU 420. The primary ECU 410 and the target ECU 420 may be similar to the primary hardware 110 and the target hardware 120 described above in relation to FIG. 1. Further, one or more operations in FIG. 4A and FIG. 4B may involve or may be part of one or more operations described above with reference to FIG. 2 and FIG. 3.

At step 1, the primary ECU 410 may broadcast the attestation capability that may be received by the target ECU 420, where the target ECU 420 may then count the amount of time it has received the attestation capability and transmit the attestation request to the primary ECU 410 once the count exceeds a threshold at steps 2 to 3, in the similar manner as described above in relation to operation S210.

At step 4, the primary ECU 410 may validate the received attestation request, in the similar manner as described above in relation to operation S220.

At steps 5 to 6, in response to a successful validation of the received attestation request, the primary ECU 410 may transmit a request to receive the attestation parameter to the target ECU 420, and may receive the attestation parameter from the target ECU 420, in the similar manner as described above in relation to operation S230.

At steps 7 to 8, the primary ECU 410 may determine the communication schedule, and may transmit the communication schedule to the target ECU 420, in the similar manner as described above in relation to operation S235.

At steps 9 to 10, the primary ECU 410 may determine the PoW and transmit the PoW to the target ECU 420, where the target ECU 420 may then perform the PoW and transmit the result of performing the PoW to the primary ECU 410 at steps 11 to 12, in the similar manner as described above in relation to operation S240.

At step 13, the primary ECU 410 may validate the result of performing the PoW, in the similar manner as described above in relation to operation S250.

At step 14, in response to a successful validation of the result of performing the PoW, the primary ECU 410 may specify the target ECU 420 as attested in the attestation map, in the similar manner as described above in relation to operation S260.

At step 15, the primary ECU 410 may track the amount of time which the target ECU 420 fails to communicate according to the communication schedule, in the similar manner as described above in relation to operation S280.

At step 16, in response to determining that amount of time is greater than the threshold, the primary ECU 410 may determine that the target ECU 420 is no longer trustworthy and may specify the target ECU 420 as unattested in the attestation map, in the similar manner as described above in relation to operation S270.

FIG. 5 illustrates a block diagram of example components in a system 500, according to one or more example embodiments. The system 500 may correspond to the primary hardware 110 in FIG. 1, thus the features associated with the primary hardware 110 and the system 500 may be similarly applicable to each other, unless being explicitly described otherwise.

As illustrated in FIG. 5, the system 510 may include at least one bus 511, at least one processor 512, at least one memory 513, at least one storage component 514, at least one input component 515, at least one output component 516, and at least one communication interface 517.

It is contemplated that the system 510 may include more or less components than illustrated in FIG. 5, without departing from the scope of the present disclosure. For instance, in some embodiments, the system 510 may include a plurality of storage components 514, the input component 515 and the output component 516 may be implemented as a transceiver component, the memory 513 and storage component 514 may be implemented as a memory storage, and the like.

The bus 511 may be configured to facilitate or enable communications among the components of the system 510. Specifically, the bus 511 may communicatively couple the components to each other and provide a means for data transfer and flow of control signals between the components. The bus 511 may include one or more of: an internal bus, an address bus, a data bus, a control bus, a controller area network (CAN) bus, an Ethernet bus, a peripheral component interconnect express (PCIe) bus, and any other suitable type of bus that can be implemented in the system 510 to enable communication and coordination between the components within the system 510 in real-time (or near real-time).

The processor 512 may be implemented in hardware, firmware, or a combination of hardware and software, and may be configured to handle real-time (or near real-time) data processing and control of the control system 510. The processor 512 may include one or more of: a central processing unit (CPU), a graphics processing unit (GPU), a neural processing unit (NPU), a tensor processing unit (TPU), an accelerated processing unit (APU), a microprocessor, a microcontroller, a digital signal processor (DSP), a field-programmable gate array (FPGA), an application-specific integrated circuit (ASIC), and/or another type of processing or computing component that can be implemented in the system 510. In some implementations, the processor 512 may be capable of being programmed to perform one or more operations described herein. Further, the processor 512 may include a plurality of processing units, each of which is dedicated to performing a specific operation.

The memory 513 may include one or more mediums for storing temporary data, runtime variables, program instructions, and buffers required for the operations of the control system 510. The memory 513 may include one or more of: a flash memory, a read-only memory (ROM), a random-access memory (RAM), a dynamic or static storage device (e.g., a flash memory, a magnetic memory, and/or an optical memory), any other suitable type of memory that can be implemented in the system 510 to store information and/or instructions for use by the processor 512.

The storage component 514 may be configured to store non-volatile data, such as firmware, configuration settings, calibration data, information, and/or software related to the operation and use of the system 510. For example, the storage component 514 may include a hard disk (e.g., a magnetic disk, an optical disk, a magneto-optic disk, and/or a solid state disk), a compact disc (CD), a digital versatile disc (DVD), a floppy disk, a cartridge, a magnetic tape, and/or another type of non-transitory computer-readable medium, along with a corresponding drive.

According to example embodiments, the storage component 514 may be configured to store computer-readable or computer-executable instructions for implementing one or more operations of the system 510. The storage component 514 may provide the stored information to the memory 513 for the execution of the processor 512.

The input component 515 may include one or more input components that permit the system 510 to receive information, such as via user input (e.g., a touch screen display, a keyboard, a keypad, a mouse, a button, a switch, and/or a microphone). The output component 516 may include one or more output components that provide output information from the system 510 (e.g., a display, a speaker, a navigation device, one or more light-emitting diodes (LEDs), etc.) According to example embodiments, the input component 515 and/or the output component 516 may be optional and may be excluded from the system 510.

The at least one communication interface 517 may include a transceiver-like component (e.g., a transceiver and/or a separate receiver and transmitter) that enables the system 510 to communicate with other components (e.g., ECUs, user devices, etc.), such as via a wired connection, a wireless connection, or a combination of wired and wireless connections. For example, communication interface 517 may include a controller area network (CAN) bus interface, an Ethernet interface, an optical interface, a coaxial interface, an infrared interface, a radio frequency (RF) interface, a universal serial bus (USB) interface, a Wi-Fi interface, a cellular network interface, or the like.

According to one or more embodiments, the communication interface 517 may include at least one input/output (I/O) interface, at least one network interface, at least one storage interface, or the like, that enable the components 512-516 to communicate with other components. Further, the communication interface 517 may include one or more application programming interfaces (APIs) that allow the system 510 (or one or more components included therein) to communicate with one or more software applications (e.g., software application deployed in the ECUs, etc.)

Computer-executable instructions (e.g., software instructions, etc.) may be read into memory 513 and/or storage component 514 from another computer-readable medium or from another device (e.g., a remote server, an external storage, etc.) via, for example, the communication interface 517. When executed, the computer-executable instructions stored in memory 513 and/or storage component 514 may cause the processor 512 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

It is contemplated that features, advantages, and significances of example embodiments described hereinabove are merely a portion of the present disclosure, and are not intended to be exhaustive or to limit the scope of the present disclosure. Further descriptions of the features, components, configuration, operations, and implementations of example embodiments of the present disclosure, as well as the associated technical advantages and significances, are provided in the following.

It is understood that the specific order or hierarchy of blocks in the processes/ flowcharts disclosed herein is an illustration of example approaches. Based upon design preferences, it is understood that the specific order or hierarchy of blocks in the processes/ flowcharts may be rearranged. Further, some blocks may be combined or omitted. The accompanying method claims present elements of the various blocks in a sample order, and are not meant to be limited to the specific order or hierarchy presented.

Some embodiments may relate to a system, a method, and/or a computer-readable medium at any possible technical detail level of integration. Further, as described hereinabove, one or more of the above components described above may be implemented as instructions stored on a computer readable medium and executable by at least one processor (and/or may include at least one processor ). The computer-readable medium may include a computer-readable non-transitory storage medium (or media) having computer-readable program instructions thereon for causing a processor (or processors) to carry out operations.

The computer readable storage medium can be a tangible device that can retain and store instructions for use by an instruction execution device. The computer-readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program code/instructions for carrying out operations may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object-oriented programming languages such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects or operations.

These computer readable program instructions may be provided to a processor of a SoC, a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or another device to cause a series of operational steps to be performed on the computer, other programmable apparatus or other device to produce a computer-implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer-readable media according to various embodiments. In this regard, each block in the flowchart or block diagrams may represent a module, segment, or portion of instructions, which comprises one or more executable instructions for implementing the specified logical function(s). The method, computer system, and computer-readable medium may include additional blocks, fewer blocks, different blocks, or differently arranged blocks than those depicted in the Figures. In some alternative implementations, the functions noted in the blocks may occur out of the order noted in the Figures. For example, two blocks shown in succession may, in fact, be executed concurrently or substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware may be designed to implement the systems and/or methods based on the description herein.

## Claims

1. A system comprising:
a memory storage storing computer-executable instructions; and
at least one processor communicatively coupled to the memory storage, wherein the at least one processor is configured to execute the instructions to:
receive, from a target hardware, an attestation request along with a cryptographic signature;
validate the attestation request based on the cryptographic signature;
obtain, from the target hardware in response to a successful validation of the attestation request, an attestation parameter of the target hardware;
instruct the target hardware to perform a proof of work (PoW);
validate a result of performing the PoW by the target hardware based on the obtained attestation parameter of the target hardware; and
specify, in response to a successful validation of the result of performing the PoW, the target hardware as attested.

2. The system according to claim 1, wherein the obtained attestation parameter comprises at least one of: a CPU speed, a CPU frequency, and a power level.

3. The system according to claim 1 or 2, wherein the at least one processor is further configured to execute the instructions to:
broadcast an attestation capability;
detect a broadcast-end condition; and
terminate broadcasting the attestation capability in response to detecting the broadcast-end condition.

4. The system according to claim 3, wherein the broadcast-end condition comprises: a vehicle not being in motion and a time after a primary hardware is powered up being less than a threshold.

5. The system according to any one of claims 1 to 4, wherein the at least one processor is further configured to execute the instructions to:
establish a communication schedule with the target hardware based on the obtained attestation parameter of the target hardware and an attestation parameter of a primary hardware;
determine an amount of time which the target hardware fails to communicate according to the communication schedule; and
specify, in response to determining that the amount of time which the target hardware fails to communicate according to the communication schedule exceeds a threshold, the target hardware as unattested.

6. The system according to any one of claims 1 to 5, wherein the target hardware is specified as attested in an attestation map along with a time stamp of a last communication from the target hardware.

7. The system according to any one of claims 1 to 6, wherein the target hardware comprises an electronic control unit (ECU).

8. A method comprising:
receiving, from a target hardware, an attestation request along with a cryptographic signature;
validating the attestation request based on the cryptographic signature;
obtaining, from the target hardware in response to a successful validation of the attestation request, an attestation parameter of the target hardware;
instructing the target hardware to perform a proof of work (PoW);
validating a result of performing the PoW by the target hardware based on the obtained attestation parameter of the target hardware; and
specifying, in response to a successful validation of the result of performing the PoW, the target hardware as attested.

9. The method according to claim 8, wherein the obtained attestation parameter comprises at least one of: a CPU speed, a CPU frequency, and a power level.

10. The method according to claim 8 or 9, wherein the method further comprises:
broadcasting an attestation capability;
detecting a broadcast-end condition; and
terminating broadcasting the attestation capability in response to detecting the broadcast-end condition.

11. The method according to claim 10, wherein the broadcast-end condition comprises: a vehicle not being in motion and a time after a primary hardware is powered up being less than a threshold.

12. The method according to any one of claims 8 to 11, wherein the method further comprises:
establishing a communication schedule with the target hardware based on the obtained attestation parameter of the target hardware and an attestation parameter of a primary hardware;
determining an amount of time which the target hardware fails to communicate according to the communication schedule; and
specifying, in response to determining that the amount of time which the target hardware fails to communicate according to the communication schedule exceeds a threshold, the target hardware as unattested.

13. The method according to any one of claims 8 to 12, wherein the target hardware is specified as attested in an attestation map along with a time stamp of a last communication from the target hardware.

14. The method according to any one of claims 8 to 13, wherein the target hardware comprises an electronic control unit (ECU).

15. A computer program causing at least one processor to perform a method comprising:
receiving, from a target hardware, an attestation request along with a cryptographic signature;
validating the attestation request based on the cryptographic signature;
obtaining, from the target hardware in response to a successful validation of the attestation request, an attestation parameter of the target hardware;
instructing the target hardware to perform a proof of work (PoW);
validating a result of performing the PoW by the target hardware based on the obtained attestation parameter of the target hardware; and
specifying, in response to a successful validation of the result of performing the PoW, the target hardware as attested.
